# EUROPÄISCHE PATENTSCHRIFT

(11) **EP 0 903 267 B1**
(45) Veröffentlichungstag und Bekanntmachung des Hinweises auf die Patenterteilung: **16.10.2002**
(21) Anmeldenummer: 98113353.1
(22) Anmeldetag: 17.07.1998
(51) Int. Cl.: B60R 21/13, G01C 9/08

(54) **Einrichtung und Verfahren zur Steuerung von Unfallschutz-Auslöseeinrichtungen in Kraftfahrzeugen**
Apparatus and method for controlling the inflation of a restraint system in a vehicle
Appareil et méthode pour commander la mise à feu d' un dispositif de retenue dans un véhicule

(30) Priorität: 21.08.1997 DE 19736328
(43) Veröffentlichungstag der Anmeldung: 24.03.1999
(73) Patentinhaber: Bayerische Motoren Werke Aktiengesellschaft, 80788 München (DE)
(72) Erfinder: Griessbach, Robert, 83629 Weyarn (DE)

(56) Entgegenhaltungen:
- DE-A- 3 737 554
- DE-A- 3 815 938
- DE-C- 4 114 992
- US-A- 4 531 300
- US-A- 4 788 773

## Beschreibung

Die Erfindung betrifft eine Einrichtung nach dem Oberbegriff eines der Ansprüche 1 bis 3 sowie Verfahren zur Steuerung von Unfallschutz-Auslöseeinrichtungen in Kraftfahrzeugen gemäß dem Oberbegriff der Ansprüche 6 und 7 bei Gefahr eines Überschlagens derselben.

Einrichtungen zum Steuern von Unfallschutz-Auslöseeinrichtungen bei einem drohenden Überschlag des Fahrzeugs werden derzeit bei Cabriolet-Personenkraftwagen zum Steuern von ausfahrbaren Überrollbügeln eingesetzt. Das Ausfahren der Überrollbügel ist dabei reversibel und beeinträchtigt die Insassen des Fahrzeugs verhältnismäßig wenig, so daß es möglich ist, den Überrollbügel auch dann auszufahren, wenn nicht genau ermittelt werden kann, ob sich das Fahrzeug tatsächlich überschlägt oder nicht. Die Anforderungen an die herkömmlichen Einrichtungen in Bezug auf mögliche Fehlauslösungen sind daher nicht besonders hoch.

Gattungsgemäße Einrichtungen bzw. Verfahren sind aus der DE 3 815 938 A bekannt.

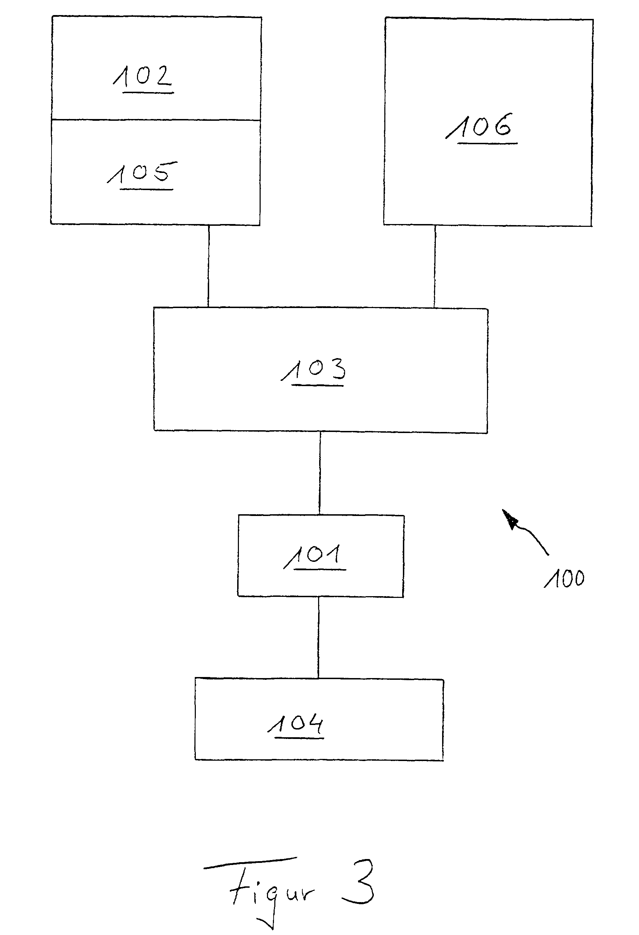

Figur 3 zeigt eine herkömmliche Einrichtung 100 zur Steuerung einer Auslöseeinrichtung 101 für einen Überrollbügel. Demgemäß weist diese Einrichtung 100 einen Quersensor 102 (Libellensensor) auf, welcher einen für die Querbeschleunigung in Kombination mit der Querneigung des Fahrzeugs charakteristischen Quermeßwert zu einer mit dem Quersensor 102 datenübertragend verbundenen Steuereinrichtung 103 ausgibt, mittels welcher der Quermeßwert auswertbar und die Überrollbügel-Auslöseeinrichtung 101 zum Betätigen eines Überrollbügelsystems 104 gemäß der Auswertung betätigbar ist. Die Einrichtung 100 weist auch einen Längssensor 105 mit dem gleichen Aufbau wie der Quersensor 102 auf, wobei der Längssensor 105, welcher ebenfalls datenübertragend mit der Steuereinrichtung 103 verbunden ist, derart angeordnet ist, daß er einen für die Längsbeschleunigung in Kombination mit der Längsneigung des Fahrzeugs charakteristischen Längsmeßwert zu der Steuereinrichtung 103 ausgibt, welche auch den Längsmeßwert auswertet und die Überrollbügel-Auslöseeinrichtung 101 gemäß der Auswertung betätigt. Die Ausdrücke "Längsbeschleunigung" und "Längsneigung" bezeichnen dabei die im fahrzeugfesten Koordinatensystem in Richtung der Längsachse des Fahrzeugs wirkende Beschleunigung bzw. die sich bei einer Drehung des Fahrzeugs um dessen Querachse ergebende Neigung des Fahrzeugs gegenüber der horizontalen Ebene. Die Längsneigung ergibt sich dabei je nach Anordnung des Längssensors am Fahrzeug aus dem Nickwinkel des Fahrzeugs (Winkel zwischen der Fahrzeugaufbaulängsachse und der Fahrbahnlängsachse) und dem Winkel zwischen der Fahrbahnlängsachse und der Horizontalen (Längssensor ist am Fahrzeugaufbau angeordnet) oder lediglich als Winkel zwischen der Fahrbahnlängsachse und der Horizontalen (Längssensor ist fahrwerkfest angeordnet). Die Ausdrücke "Querbeschleunigung" und "Querneigung" bezeichnen dabei die im fahrzeugfesten Koordinatensystem quer zur Längsrichtung des Fahrzeugs wirkende Beschleunigung bzw. die sich bei einer Drehung des Fahrzeugs um dessen Längsachse ergebende Neigung des Fahrzeugs gegenüber der horizontalen Ebene. Die Querneigung ergibt sich dabei je nach Anordnung des Quersensors am Fahrzeug aus dem Wankwinkel des Fahrzeugs (Winkel zwischen der Fahrzeugaufbauquerachse und der Fahrbahnquerachse) und dem Winkel zwischen der Fahrbahnquerachse und der Horizontalen (Quersensor ist am Fahrzeugaufbau angeordnet) oder lediglich als Winkel zwischen der Fahrbahnquerachse und der Horizontalen (Quersensor ist fahrwerkfest angeordnet).

Neben dem Quer- und Längssensor 102 bzw. 105 weist die herkömmliche Einrichtung 100 auch einen G-Sensor 106 auf, welcher ein Abheben des Fahrzeugs vom Boden erfaßt, und daraufhin ein dafür bezeichnendes Signal an die Steuereinrichtung 103 ausgibt, welche daraufhin die Überrollbügel-Auslöseeinrichtung 101 betätigt.

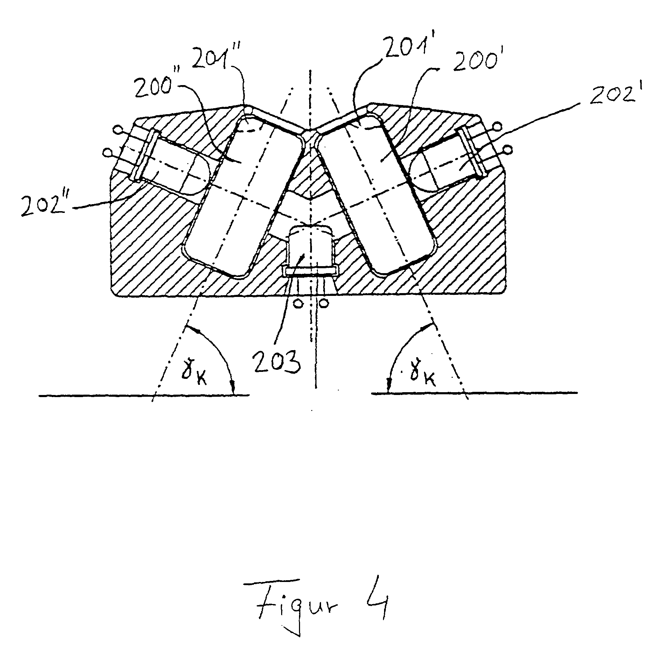

Ein herkömmlicher Libellensensor, welcher sowohl als Längs- und als Quersensor 102 bzw. 105 einsetzbar ist, ist schematisch in Figur 4 dargestellt. Demgemäß weist der Libellensensor zwei hohle, zylinderförmige Teile (Libellen) 200' bzw. 200'' auf, deren Zylinderlängsachsen bezüglich einer vertikalen Achse symmetrisch zueinander angeordnet und jeweils in einem Winkel γ_{K} zur Horizontalen geneigt sind, wobei die Zylinderlängsachsen mit der vertikalen Achse in einer Ebene liegen. Diese Libellen 200', 200'' sind teilweise mit Flüssigkeit gefüllt, wobei sich in der jeweiligen Libelle ferner eine Gasblase 201', 201'' befindet, welche je nach Winkellage der Zylinderlängsachse gegenüber der Horizontalen eine bestimmte Position in der Libelle 200' bzw. 200'' einnimmt. In Längsrichtung der jeweiligen Libelle 200' bzw. 200'' ist an einer Mittelposition jeweils eine optische Einrichtung angeordnet, mittels welcher erfaßt werden kann, wenn die Gasblase 201', 201'' sich in Längsrichtung der Libelle 200' bzw. 200'' gesehen in deren Mitte befindet. Die optische Einrichtung weist dabei eine LED 202' bzw. 202'' und einen zu derselben gegenüberliegend angeordneten Fototransistor 203 auf. Wird der Libellensensor mit seiner Symmetrieachse parallel zu der Hochachse des fahrzeugfesten Koordinatensystems und mit parallel zur Querrichtung des Fahrzeugs geneigten Libellen 200', 200'' angeordnet, dann bewirkt eine Querneigung des Fahrzeugs, daß die jeweilige Gasblase 201' bzw. 201'' sich je nach Querneigungsrichtung in der zugeordneten Libelle 200' bzw. 200'' bewegt. Sobald das Fahrzeug um den Winkel γ_{K}, welcher den kritischen Winkel darstellt, für den ein Überschlagen des Fahrzeugs zu erwarten ist, geneigt ist, befindet sich die eine oder die andere Gasblase 201' bzw. 201'', je nach Querneigungsrichtung, in der Mitte der jeweils zugeordneten Libelle 200' bzw. 200'', was von der optischen Einrichtung erfaßt und an die Steuereinrichtung 103 weitergegeben wird, welche ihrerseits die Überrollbügel-Auslöseeinrichtung 101 betätigt. Mittels dieses derart angeordneten Libellensensors werden ferner auch Beschleunigungen in Querrichtung des Fahrzeugs erfaßt, da sich die Gasblasen 201', 201'' aufgrund ihrer im Vergleich zur Flüssigkeit geringeren Massenträgheit bei einer Kurvenfahrt des Fahrzeugs, je nach Größe und Richtung der daraus resultierenden Zentrifugalkraft in der zugeordneten Libelle 200' bzw. 200'' bewegen. Damit wird insgesamt ein Quermeßwert erfaßt, welcher für die Querbeschleunigung in Kombination mit der Querneigung des Fahrzeugs charakteristisch ist und sich in diesem Falle als Winkelmeßwert ergibt. Erfaßt die optische Einrichtung, daß sich eine der Gasblasen 201', 201'' aufgrund einer Querbeschleunigung und/oder einer Querneigung des Fahrzeugs in der Mittelposition in der jeweiligen Libelle 200', 200'' befindet, was dem Erreichen des kritischen Winkels γ_{K} entspricht, dann wird die Überrollbügel-Auslöseeinrichtung 101 betätigt. Dieser Libellensensor wird gemäß dem gleichen Meßprinzip auch für die Längsrichtung eingesetzt, in welche er, wie oben angegeben, einen sich aus der Längsbeschleunigung und der Längsneigung des Fahrzeugs zusammengesetzten, charakteristischen Längsmeßwert eingibt, wobei der kritische Winkel für die Längsrichtung des Fahrzeugs in der Regel größer definiert ist als für dessen Querrichtung.

Bei der herkömmlichen Einrichtung 100 zur Steuerung der Überrollbügel-Auslöseeinrichtung 101 besteht jedoch die Möglichkeit, daß, wenn der Quer- oder der Längssensor bei schneller Fahrt des Fahrzeugs aufgrund eines im Vergleich zu dem Fahrzeug anderen Trägheitsverhaltens der Flüssigkeit-Gasblasen-Kombination in den Libellen ein Überschlagen des Fahrzeugs anzeigt, das Überrollbügelsystem 104 ausgelöst wird, obwohl sich das Fahrzeug noch mit allen Rädern auf der Fahrbahn befindet. Wie oben angegeben, ist jedoch das Ausfahren des Überrollbügels für die Fahrzeugbenutzer nicht kritisch, so daß der kritische charakteristische Meßwert, d.h. in diesem Fall der kritische Winkel, mit ausreichender Sicherheit vorbestimmt ist, wobei Fehlauslösungen in Kauf genommen werden.

Ist es vorgesehen, auch andere Unfallschutz-Auslöseeinrichtungen, wie beispielsweise für Airbags oder pyrotechnisch betätigte Gurtstraffer, bei einem drohenden Überschlagen des Kraftfahrzeugs zu betätigen, dann können Fehlauslösungen zu einer Gefährdung des Fahrbetriebs führen, wobei es ferner erforderlich ist, die in diesem Falle nicht reversiblen Unfallschutzeinrichtungen nach ihrer Betätigung unter hohem Kostenaufwand neu zu installieren.

Durch die Erfindung werden zur Steuerung von Unfallschutz-Auslöseeinrichtungen Einrichtungen und entsprechende Verfahren geschaffen, mittels welchen Fehlauslösungen aufgrund einer fälschlicherweise erfaßten Überschlaggefahr eines Fahrzeugs verhindert werden können.

Dies wird erfindungsgemäß gelöst durch eine Einrichtung mit den Merkmalen des Anspruchs 1.

Die oben genannte Aufgabe wird ferner erfindungsgemäß gelöst durch ein Verfahren zur Steuerung von Unfallschutz-Auslöseeinrichtungen in Kraftfahrzeugen gemäß der Merkmale des Anspruchs 5.

Mittels der Einrichtung und des Verfahrens gemäß der Erfindung ist es möglich, die Querbeschleunigung des Fahrzeugs nicht nur in Kombination mit der Querneigung desselben zu erfassen, sondern durch Auswerten der ermittelten Raddrehzahlen auch die Querbeschleunigung des Fahrzeugs allein zu ermitteln, so daß im normalen Fahrbetrieb des Fahrzeugs, d.h. wenn alle oder zumindest jene beiden Räder Bodenkontakt haben, an welchen die Raddrehzahlsensoren angeordnet sind, durch Kompensieren des Einflusses der Querbeschleunigung auf den Quermeßwert, der tatsächliche Querneigungswinkel (charakteristischer Querneigungswert) des Fahrzeugs ermittelt werden kann. Weist dieser ermittelte, tatsächliche Querneigungswinkel einen unkritischen Wert auf, dann werden die Unfallschutz-Auslöseeinrichtungen auch dann nicht betätigt, wenn gemäß dem Quermeßwert eine Betätigung erforderlich wäre, da sich das Fahrzeug noch in einem stabilen Fahrzustand, d.h. mit allen Rädern auf dem Boden, befindet. Die Raddrehzahlsensoren werden vorteilhafterweise an nicht antreibenden Rädern angeordnet, da insbesondere an den Antriebsrädern in deren Laufrichtung Schlupf auftreten kann, welcher zu Fehlern bei der Erfassung der Raddrehzahlen führt. Es ist ferner vorteilhaft, an allen Rädern Raddrehzahlsensoren anzuordnen, oder beispielsweise bereits die an allen Rädern angeordneten Raddrehzahlsensoren einer ABS-Anlage zu verwenden, so daß die erfaßten Raddrehzahlen miteinander verglichen werden können und etwaige Abweichungen einer Raddrehzahl gemäß den anderen gemessenen Raddrehzahlen korrigiert werden können. Die Vorrichtung und das Verfahren gemäß der Erfindung erlauben den Einsatz eines wie oben beschriebenen herkömmlichen Quersensors. Anhand der auf unterschiedlichen Fahrzeugseiten erfaßten Raddrehzahlen wird im Falle einer Kurvenfahrt des Fahrzeugs über die Differenz der Raddrehzahlen die Kurvengeschwindigkeit und der gefahrene Kurvenradius bestimmt. Daraus wird die aufgrund der Kurvenfahrt in die Querrichtung des Fahrzeugs wirkende Zentripetalbeschleunigung ermittelt. Damit wird wiederum der aus der Zentripetalbeschleunigung herrührende Einfluß auf den Quermeßwert kompensiert und somit der tatsächliche Querneigungswinkel des Fahrzeugs ermittelt. Somit kann mittels der Vorichtung und des Verfahrens gemäß der Erfindung der bisher allein für die Entscheidung einer Betätigung einer Unfallschutz-Auslöseeinrichtung verantwortliche Quermeßwert überprüft werden, um so Fehlauslösungen der oben genannten Art zu vermeiden.

Alternativ zu dieser Lösung wird die oben genannte Aufgabe auch gelöst durch eine Einrichtung mit den Merkmalen des Anspruchs 2.

Demgemäß wird alternativ zu dem oben genannten Verfahren ein Verfahren zur Steuerung von Unfallschutz-Auslöseeinrichtungen in Kraftfahrzeugen mit den Merkmalen des Anspruchs 6 vorgeschlagen.

Diese Einrichtung und dieses Verfahren ermöglichen es, wie die erstgenannte Einrichtung und das erstgenannte Verfahren, die Querbeschleunigung des Fahrzeugs gesondert zu erfassen, um damit zusammen mit dem Quermeßwert den tatsächlichen Querneigungswinkel des Fahrzeugs zu ermitteln, welcher zusätzlich zu dem ermittelten Quermeßwert für die Entscheidung eines Betätigens der Unfallschutz-Auslöseeinrichtungen herangezogen wird. In diesem Falle wird die Querbeschleunigung aus der wenigstens einen Raddrehzahl und dem Lenkwinkel des Fahrzeugs ermittelt, wobei im einzelnen der Kurvenradius aus dem Lenkwinkel, die Kurvengeschwindigkeit des Fahrzeugs aus der ermittelten Raddrehzahl in Verbindung mit dem Lenkwinkel und die Querbeschleunigung aus der Kurvengeschwindigkeit und dem Radius berechnet wird. Ferner ist es möglich, wenn beispielsweise an zwei Rädern auf unterschiedlichen Seiten des Fahrzeugs die Raddrehzahl gemessen wird, auch dann noch die Querbeschleunigung des Fahrzeugs zu erfassen, wenn dieses mit zwei auf derselben Fahrzeugseite angeordneten Rädern in der Luft ist, so daß die Unfallschutz-Auslöseeinrichtungen in diesem Falle auch dann betätigt werden können, wenn der ermittelte tatsächliche Querneigungswinkel einen kritischen Wert überschreitet oder wenn der Gradient zwischen zwei ermittelten Querneigungswinkeln so steil ist, daß ein Überschlag zu erwarten ist. Vorteilhafterweise sind an allen Rädern Raddrehzahlsensoren angeordnet, wodurch die Genauigkeit in der Erfassung der Raddrehzahlen weiter erhöht werden kann, da beispielsweise durch Schlupf von Rädern auftretende Fehler in der gemessenen Raddrehzahl durch Vergleichen mit über die anderen Raddrehzahlsensoren erfaßten Raddrehzahlen erkannt werden können. Ferner kann auch der sich über die Raddrehzahlen ergebende Kurvenradius der von dem Fahrzeug gefahrenen Kurve mit dem sich aus dem Lenkwinkel des Fahrzeugs ergebenden Kurvenradius verglichen werden, so daß auch über diesen Vergleich eine Korrektur der erfaßten Raddrehzahlen möglich ist.

Die oben genannte Aufgabe wird ferner gelöst durch eine Einrichtung mit den Merkmalen des Anspruchs 3.

Hierzu wird erfindungsgemäß ein Verfahren zur Steuerung von Unfallschutz-Auslöseeinrichtungen in Kraftfahrzeugen mit den Merkmalen des Anspruchs 7 vorgeschlagen.

Das Prinzip dieser Einrichtung und dieses Verfahrens ist das gleiche wie jenes der in Verbindung mit der Querrichtung des Fahrzeugs beschriebenen Einrichtungen und Verfahren; d.h. es werden die aus einer Beschleunigung, d.h. in diesem Falle der Längsbeschleunigung, des Fahrzeugs herrührenden Einflüsse auf den die Beschleunigung und die Neigung des Fahrzeugs enthaltenden Meßwert, in diesem Falle auf den Längsmeßwert, kompensiert, um so den tatsächlichen Längsneigungswinkel (charakteristischer Längsneigungswert) des Fahrzeugs zu bestimmten und damit festzustellen, ob das Fahrzeug tatsächlich schon um eine Achse, in diesem Falle die Querachse, kippt. Anhand des nun vorliegenden Längsneigungswinkel des Fahrzeugs kann die Steuereinrichtung die Anzeige des Längssensors überprüfen und daraufhin die Unfallschutz-Auslöseeinrichtung betätigen oder nicht. Erfindungsgemäß kann als Längssensor ein wie oben beschriebener, herkömmlicher Libellensensor verwendet werden, welcher die Längsneigung in Kombination mit der Längsbeschleunigung in Form eines charakteristischen Längsmeßwerts, d.h. in Form der Position der Gasblase relativ zu der Libelle, erfaßt. Im Falle einer Kurvenfahrt des Fahrzeugs ergeben sich Ungenauigkeiten im Erfassen der tatsächlichen Längsbeschleunigung des Fahrzeugs, da sich in einem solchen Falle die Raddrehzahlen der Räder auf unterschiedlichen Fahrzeugseiten auf unterschiedliche Weise ändern. Daher wird vorteilhafterweise an wenigstens zwei verschiedenen Rädern des Fahrzeugs auf unterschiedlichen Fahrzeugseiten ein derartiger Sensor angeordnet, so daß an auf unterschiedlichen Fahrzeugseiten angeordneten Rädern die Raddrehzahl erfaßt werden kann, um damit Einflüsse einer Kurvenfahrt des Fahrzeugs auf die über eine Raddrehzahl erfaßte Längsbeschleunigung des Fahrzeugs kompensieren zu können.

In einer Ausführungsform wird als bevorzugt vorgeschlagen, daß die Einrichtung einen mit der Steuereinrichtung verbundenen Lenkwinkelsensor aufweist, welcher den Lenkwinkel des Fahrzeugs erfaßt. Über den Lenkwinkel kann im Falle einer Kurvenfahrt des Fahrzeugs der Kurvenradius und die Kurvenrichtung bestimmt werden, so daß die aufgrund der Kurvenfahrt auftretende Raddrehzahländerung des Rades kompensiert werden und damit auch im Falle der Kurvenfahrt des Fahrzeugs die Längsbeschleunigung desselben genau ermittelt werden kann.

Damit können Einflüsse einer Kurvenfahrt des Fahrzeugs auf die Raddrehzahl des Rades und damit Einflüsse einer Kurvenfahrt auf die über die Raddrehzahl erfaßte Längsbeschleunigung des Fahrzeugs kompensiert werden. Sind an Rädern unterschiedlicher Fahrzeugseiten Raddrehzahlsensoren vorgesehen, dann können aufgrund eines Schlupfs von Rädern in deren Laufrichtung auftretende Fehler beim Erfassen der Raddrehzahlen durch Vergleichen des über den Lenkwinkel des Fahrzeugs ermittelten Kurvenradius desselben mit dem über die Raddrehzahlen des Fahrzeugs ermittelten Kurvenradius desselben korrigiert werden.

Insgesamt können die im Zusammenhang mit der Querrichtung des Fahrzeugs beschriebenen Einrichtungen und Verfahren auch jeweils mit den im Zusammenhang mit der Längsrichtung des Fahrzeugs beschriebenen Einrichtungen und Verfahren kombiniert werden, wobei für die Bestimmung der Quer- und Längsbeschleunigung die gleichen Raddrehzahlsensoren, die gleiche Steuereinrichtung und gegebenenfalls der gleiche Lenkwinkelsensor verwendet werden können.

Vorteilhafterweise wird ferner für die beschriebenen Einrichtungen vorgeschlagen, daß diese einen datenübertragend mit der Steuereinrichtung verbundenen Giersensor aufweisen, welcher die Giergeschwindigkeit des Fahrzeugs erfaßt.

Unter dem Begriff "Giergeschwindigkeit" wird dabei die bezüglich des fahrzeugfesten Koordinatensystems in Richtung um die Hochachse desselben weisende Drehgeschwindigkeit verstanden. Giergeschwindigkeiten treten beispielsweise im Falle eines Schleuderns des Fahrzeugs auf und bewirken Zentripetalbeschleunigungen in Längsrichtung und Querrichtung des Fahrzeugs, welche von dem Längs- bzw. Quersensor erfaßt werden, wobei dieses Sensoren daraufhin eventuell einen Überschlag des Fahrzeugs anzeigen, obwohl dieser nicht eintritt. Mittels der den Giersensor aufweisenden Einrichtung ist es möglich, von einer Gierbewegung des Fahrzeugs herrührende Einflüsse auf den Quer- und/oder den Längsmeßwert zu kompensieren.

Demgemäß wird für die erwähnten Verfahren vorgeschlagen, daß die Giergeschwindigkeit des Kraftfahrzeugs gemessen wird und daß aus der Giergeschwindigkeit resultierende Einflüsse auf den Quer- bzw. Längsmeßwert kompensiert werden. Damit können auch die durch eine Gierbewegung des Fahrzeugs bedingten Fehlauslösungen von im Falle eines Überschlags des Fahrzeugs vorgesehenen Unfallschutz-Vorrichtungen vermieden werden.

Die Erfindung wird im folgenden anhand bevorzugter Ausführungsformen unter Bezugnahme auf die Zeichnung erläutert. In der Zeichnung zeigen:
Figur 1 in schematischer Weise eine Ausführungsform der erfindungsgemäßen Einrichtung zur Steuerung von Unfallschutz-Auslöseeinrichtungen,
Figur 2 ein Blockschaubild zur Erläuterung des erfindungsgemäßen Verfahrens zur Steuerung von Unfallschutz-Auslöseeinrichtungen,
Figur 3 eine herkömmliche Einrichtung zur Steuerung einer Auslöseeinrichtung für einen Überrollbügel,
Figur 4 eine Schnittansicht eines herkömmlichen als Querund/oder Längssensor eingesetzten Libellensensors.

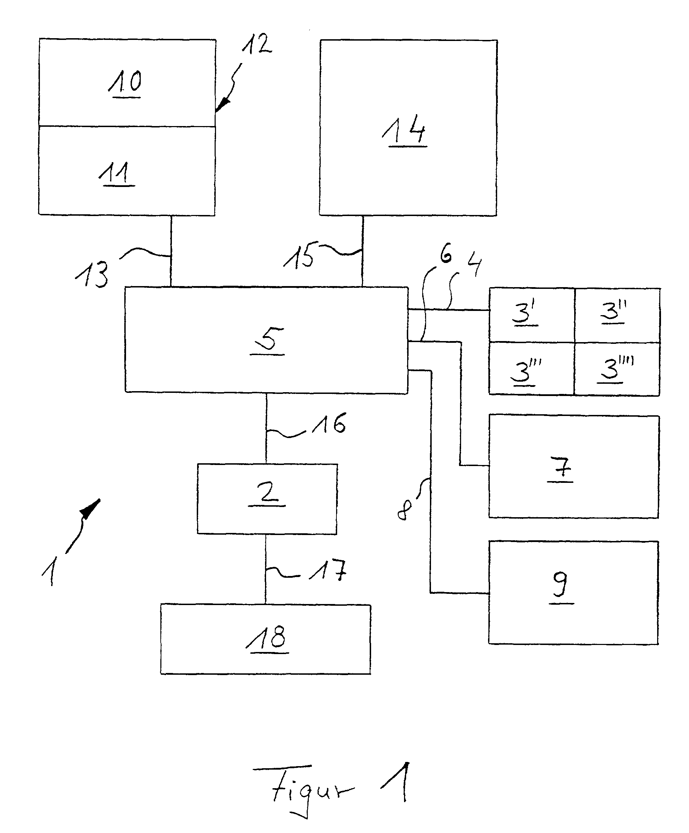

Figur 1 zeigt für ein nicht dargestelltes vierrädriges Kraftfahrzeug, wie beispielsweise einen PKW, schematisch eine Ausführungsform der erfindungsgemäßen Einrichtung 1 zur Steuerung von Unfallschutz-Auslöseeinrichtungen 2, welche zum Auslösen von bei einem Überschlag des Fahrzeugs vorgesehenen Unfallschutzeinrichtungen vorgesehen sind. Die Einrichtung 1 weist vier Raddrehzahlsensoren 3', 3'', 3''' und 3'''', von denen jeder jeweils einem Rad des Kraftfahrzeugs zugeordnet ist, um die Raddrehzahl des jeweils zugeordneten Rades zu erfassen. Die Raddrehzahlsensoren 3' bis 3'''' sind über eine Datenleitung 4 mit einer Steuereinrichtung 5 verbunden. Die Einrichtung 1 weist ferner einen über eine Datenleitung 6 mit der Steuereinrichtung 5 verbundenen Lenkwinkelsensor 7 auf, mittels dessen der Lenkwinkel des Kraftfahrzeugs erfaßbar und in die Steuereinrichtung 5 eingebbar ist. Mit der Steuereinrichtung 5 ist ferner über eine Datenleitung 8 ein Giersensor 9 verbunden, mittels dessen die Giergeschwindigkeit des Kraftfahrzeugs erfaßbar und in die Steuereinrichtung 5 eingebbar ist. Die Einrichtung 1 weist ferner einen Quersensor 10 und einen Längssensor 11 auf, welche zusammen einen herkömmlichen Überrollsensor 12 bilden. Der Quersensor 10 erfaßt, wie eingangs beschrieben, die Beschleunigung des Kraftfahrzeugs in dessen Querrichtung in Kombination mit der Querneigung des Kraftfahrzeugs in Form eines charakteristischen Quermeßwerts. Der Längssensor 11 erfaßt die Beschleunigung des Kraftfahrzeugs in dessen Längsrichtung in Kombination mit der Längsneigung des Kraftfahrzeugs in Form eines charakteristischen Längsmeßwerts. Der Überrollsensor 12 ist über eine Datenleitung 13 mit der Steuereinrichtung 5 verbunden, so daß die von dem Quer- und Längssensor erfaßten Meßwerte über diese Datenleitung 13 in die Steuereinrichtung 5 eingebbar sind. Ferner weist die Einrichtung 1 einen G-Sensor 14 auf, welcher über eine Datenleitung 15 mit der Steuereinrichtung 5 verbunden ist. Der G-Sensor erfaßt einen Schwerelosigkeitszustand des Kraftfahrzeugs, wie er beispielsweise im Falle eines Abhebens desselben vom Boden auftritt. Die Steuereinrichtung 5 ist über eine Datenleitung 16 mit der Unfallschutz-Auslöseeinrichtung 2 verbunden, welche ihrerseits über eine Datenleitung 16 mit einer Unfallschutzeinrichtung 17 verbunden ist. Obwohl lediglich eine mit der Steuereinrichtung 5 verbundene Unfallschutz-Auslöseeinrichtung 2 mit zugeordneter Unfallschutzeinrichtung 17 dargestellt ist, können beliebig viele Auslöseeinrichtungen mit jeweils zugeordneten Unfallschutzeinrichtungen an der Steuereinrichtung 5 angeschlossen sein. Es ist ferner auch möglich, nur eine Unfallschutz-Auslöseeinrichtung vorzusehen, mit welcher mehrere Unfallschutzeinrichtungen datenübertragend verbunden sind.

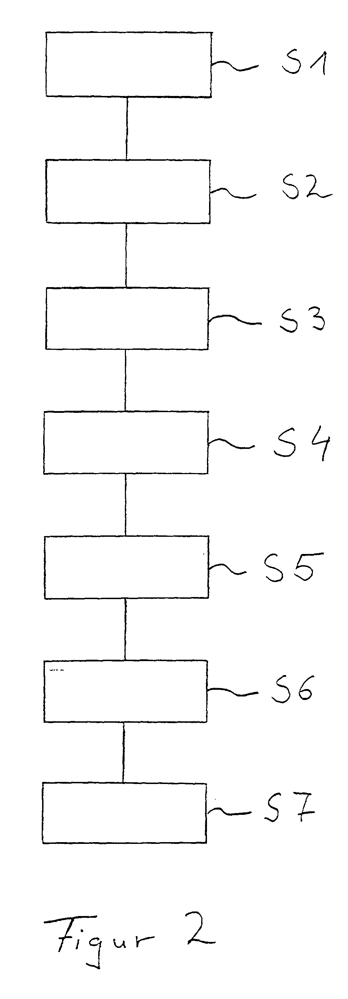

Im folgenden wird das erfindungsgemäße Verfahren zur Steuerung von Unfallschutz-Auslöseeinrichtungen anhand der Figuren 1 und 2 erläutert.

Im Schritt S1 ermittelt der Überrollsensor 12 anhand des Quersensors 10 und des Längssensors 11 einen charakteristischen Quer- bzw. Längsmeßwert, welche sich aus der Querbeschleunigung des Fahrzeugs und dessen Querneigung bzw. aus der Längsbeschleunigung des Fahrzeugs und dessen Längsneigung zusammensetzen. Die erfaßten charakteristischen Meßwerte werden über die Datenleitung 13 in die Steuereinrichtung 5 eingegeben.

Im Schritt S2 werden mittels der Raddrehzahlsensoren 3' bis 3'''' die Raddrehzahlen der vier Räder des Kraftfahrzeugs erfaßt und über die Datenleitung 4 in die Steuereinrichtung 5 eingegeben.

Im Schritt S3 wird mittels des Lenkwinkelsensors 7 der Lenkwinkel des Fahrzeugs erfaßt und über die Datenleitung 6 in die Steuereinrichtung 5 eingegeben.

Im Schritt S4 wird die Giergeschwindigkeit des Kraftfahrzeugs erfaßt und über die Datenleitung in die Steuereinrichtung 5 eingegeben.

Im Schritt S5 wertet die Steuereinrichtung 5 die in dieselbe eingegebenen Daten aus. Hierzu werden aus den in die Steuereinrichtung 5 eingegebenen Raddrehzahlen die tatsächliche Längs- und Querbeschleunigung des Kraftfahrzeugs berechnet, über den eingegebenen Lenkwinkel der Kurvenradius einer von dem Kraftfahrzeug eventuell gefahrenen Kurve berechnet und die aus den Raddrehzahlen ermittelte Längs- und Querbeschleunigung gemäß dem ermittelten Kurvenradius korrigiert.

Im Schritt S6 werden aus der eingegebenen Giergeschwindigkeit die aus einer eventuellen Gierbewegung des Fahrzeugs herrührenden Einflüsse auf den Quer- und Längsmeßwert kompensiert und aus der berechneten, tatsächliche Quer- bzw. Längsbeschleunigung des Fahrzeugs und dem korrigierten Quer- bzw. Längsmeßwert der tatsächliche Querneigungs- bzw. Längsneigungswinkel des Fahrzeugs berechnet. Ist kein Lenkwinkelsensor 7 und/oder kein Giersensor 9 vorgesehen, dann entfallen in den Schritten S5 bzw. S6 die im Zusammenhang mit dem Lenkwinkelsensor 7 bzw. mit dem Giersensor 9 stehenden Schritte.

Im Schritt S7 betätigt die Steuereinrichtung 5 anhand einer Auswertung der erfaßten und berechneten Daten die Unfallschutz-Auslöseeinrichtung 2. Hierbei wird überprüft, ob von dem G-Sensor ein Signal vorliegt, welches auf ein Abheben des Fahrzeugs vom Erdboden hindeutet. Ferner werden der Quer- und der Längsmeßwert mit dem kritischen Quer- bzw. Längsmeßwert verglichen, bei deren Überschreiten die Steuereinrichtung 5 ferner anhand der ermittelten, tatsächlichen Querneigung- bzw. Längsneigung des Fahrzeugs überprüft, ob dasselbe tatsächlich kippt. Wird festgestellt, daß sich das Fahrzeug noch in einem stabilen Fahrzustand befindet, dann wird die Unfallschutz-Auslöseeinrichtung 2 nicht betätigt. Wird dagegen eine kritische Quer- oder Längsneigung festgestellt, dann wird die Unfallschutz-Auslöseeinrichtung 2 betätigt. Falls der Lenkwinkelsensor 7 nicht eingesetzt wird, dann ist es im Falle daß zwei Räder der gleichen Fahrzeugseite gleichzeitig in der Luft sind, nicht möglich, die tatsächliche Querbeschleunigung des Fahrzeugs zu ermitteln bzw. die Längsbeschleunigung desselben genau zu ermitteln. In diesem Falle wird die Steuereinrichtung 5 die Unfallschutz-Auslöseeinrichtung lediglich anhand des Quer- bzw. Längsmeßwerts betätigen. Ein Abheben von zwei Rädern der gleichen Fahrzeugseite kann mittels der Steuereinrichtung 5 beispielsweise aus dem Umstand erkannt werden, daß sich die Raddrehzahlen der Räder auf dieser Seite abrupt ändern, während die Raddrehzahlen auf der anderen Fahrzeugseite noch die dem vorhergehenden stabilen Fahrzustand zugeordneten Raddrehzahlen aufweisen. Auch im Falle daß Räder blockieren, ist eine Bestimmung der tatsächlichen Quer- und Längsbeschleunigung über die Raddrehzahlen nicht möglich. Jedoch kann auch dies von der Steuereinrichtung 5 erfaßt werden, wobei daraufhin eine Betätigung der Unfallschutz-Auslöseeinrichtung 2 lediglich auf Basis des Quer- bzw. Längsmeßwerts erfolgt.

## Patentansprüche

1. Einrichtung zur Steuerung von Unfallschutz-Auslöseeinrichtungen in Kraftfahrzeugen, mit einer Steuereinrichtung (5) und mit einem Quersensor (10), welcher einen für die Querbeschleunigung in Kombination mit der Querneigung des Fahrzeugs charakteristischen Quermesswert zu der mit dem Quersensor (10) datenübertragend verbundenen Steuereinrichtung (5) ausgibt, mittels welcher der Quermesswert ausgewertet wird und eine Unfallschutz-Auslöseeinrichtung (2) gemäß der Auswertung betätigbar ist, **gekennzeichnet durch** zwei mit der Steuereinrichtung (5) datenübertragend verbundene Raddrehzahlsensoren (3', 3"), welche die Raddrehzahlen von wenigstens zwei verschiedenen Rädern auf unterschiedlichen Fahrzeugseiten erfassen, und **gekennzeichnet dadurch, dass** die Unfallschutz-Auslöseeinrichtung lediglich an Hand des Quermesswerts betätigbar ist wenn mittels der Raddrehzahlsensoren erkannt wird, dass zwei Räder der gleichen Fahrzeugseite in der Luft sind.

2. Einrichtung zur Steuerung von Unfallschutz-Auslöseeinrichtungen in Kraftfahrzeugen, mit einer Steuereinrichtung (5) und mit einem Quersensor (10), welcher einen für die Querbeschleunigung in Kombination mit der Querneigung des Fahrzeugs charakteristischen Quermeßwert zu der mit dem Quersensor (10) datenübertragend verbundenen Steuereinrichtung (5) ausgibt, mittels welcher der Quermeßwert auswertbar ist und eine Unfallschutz-Auslöseeinrichtung (2) gemäß der Auswertung betätigbar ist, **gekennzeichnet durch** einen mit der Steuereinrichtung (5) datenübertragend verbundenen Raddrehzahlsensor (3'), welcher die Raddrehzahl von wenigstens einem Rad erfaßt, und einen datenübertragend mit der Steuereinrichtung (5) verbundenen Lenkwinkelsensor (7), welcher den Lenkwinkel des Fahrzeugs erfaßt.

3. Einrichtung zur Steuerung von Unfallschutz-Auslöseeinrichtungen in Kraftfahrzeugen, mit einem Längssensor (11), welcher einen für die Längsbeschleunigung in Kombination mit der Längsneigung Kraftfahrzeugs charakteristischen Messwert ausgibt, und einer Steuereinrichtung (5), mittels welcher der Längsmesswert auswertbar ist und eine Unfallschutz-Auslöseeinrichtung (2) gemäß der Auswertung betätigbar ist, **gekennzeichnet durch** einen mit der Steuereinrichtung (5) datenübertragend verbundenen Raddrehzahlsensor (3'), welcher die Raddrehzahl von wenigstens einem Rad erfasst; und **gekennzeichnet dadurch, dass** die Unfallschutz-Auslöseeinrichtung lediglich an Hand des Längsmesswerts betätigbar ist, wenn mittels der Raddrehzahlsensoren erkannt wird, dass Räder blockieren.

4. Einrichtung nach einem der Ansprüche 1 bis 3, **gekennzeichnet durch** einen datenübertragend mit der Steuereinrichtung verbundenen Giersensor (9), welcher die Giergeschwindigkeit des Fahrzeugs erfaßt.

5. Verfahren zur Steuerung von Unfallschutz-Auslöseeinrichtungen in Kraftfahrzeugen, wobei folgende Verfahrensschritte vorgenommen werden:
a) Ermittlung eines für die Querbeschleunigung in Kombination mit der Querneigung des Fahrzeugs charakteristischen Quermeßwerts;
b) Ermittlung von Raddrehzahlen von wenigstens zwei verschiedenen Rädern auf unterschiedlichen Fahrzeugseiten;
c) Berechnung eines ausschließlich für die Querbeschleunigung charakteristischen Querbeschleunigungswerts aus den Raddrehzahlen; **gekennzeichnet durch**
d) eine Korrektur des Quermeßwerts, so daß aus dem Quermeßwert ein ausschließlich für die Querneigung charakteristischer Querneigungswert errechnet wird; **durch**
e) die Betätigung der Unfallschutz-Auslöseeinrichtungen in Abhängigkeit des Querneigungswerts und **durch**
f) die Betätigung der Unfallschutz auslöseeinrichtung lediglich anhand des Quermeßwertes, wenn mittels der Raddrehzahlen erkannt wird, daß zwei Räder der gleichen Fahrzeugseite in der Luft sind.

6. Verfahren zur Steuerung von Unfallschutz-Auslöseeinrichtungen in Kraftfahrzeugen, wobei folgende Verfahrensschritte vorgenommen werden:
a) Ermittlung eines für die Querbeschleunigung in Kombination mit der Querneigung des Fahrzeugs charakteristischen Quermeßwerts;
b) Ermittlung des Lenkwinkels des Fahrzeugs; **gekennzeichnet durch**
c) eine Ermittlung der Raddrehzahl von wenigstens einem Rad; **durch**
d) eine Berechnung eines ausschließlich für die Querbeschleunigung charakteristischen Querbeschleunigungswerts aus der Raddrehzahl und dem Lenkwinkel; **durch**
e) eine Korrektur des Quermeßwerts, so daß aus dem Quermeßwert ein ausschließlich für die Querneigung charakteristischer Querneigungswert errechnet wird; und **durch**
f) eine Betätigung der Unfallschutz-Auslöseeinrichtungen in Abhängigkeit des Querneigungswerts.

7. Verfahren zur Steuerung von Unfallschutz-Auslöseeinrichtungen in Kraftfahrzeugen, wobei folgende Verfahrensschritte vorgenommen werden:
a) Ermittlung eines für die Längsbeschleunigung in Kombination mit der Längsneigung des Fahrzeugs charakteristischen Längsmeßwerts;
b) Ermittlung der Raddrehzahl von wenigstens einem Rad;
c) Berechnung eines ausschließlich für die Längsbeschleunigung charakteristischen Längsbeschleunigungswerts aus der Raddrehzahl; **gekennzeichnet durch**
d) eine Korrektur des Längsmeßwerts, so daß aus dem Längsmeßwert ein ausschließlich für die Längsneigung charakteristischer Längsneigungswert errechnet wird; **durch**
e) die Betätigung der Unfallschutz-Auslöseeinrichtungen in Abhängigkeit des Längsneigungswerts und **durch**
f) die Betätigung der Unfallschutz-Auslöseeinrichtung lediglich an Hand des Längsmeßwerts, wenn aus den Raddrehzahlen erkannt wird, daß Räder blockieren.

8. Verfahren nach einem der Ansprüche 5, wobei die Giergeschwindigkeit des Kraftfahrzeugs gemessen wird und aus der Giergeschwindigkeit resultierende Einflüsse auf den Quermeßwert kompensiert werden.

## Claims

1. A device for controlling accident-prevention triggering devices in motor vehicles comprising a control device (5) with a transverse sensor (10) which delivers a transverse measurement characteristic of the transverse acceleration in combination with the lateral tilt of the vehicle to a control device (5) which is connected to the transverse sensor (10) for the purpose of transmitting data and by means of which the transverse measurement is evaluated and an accident-prevention triggering device (2) can be actuated in accordance with the evaluation, **characterised by** two wheel speed sensors (3', 3") connected to the control device (5) and detecting the speeds of at least two different wheels on different sides of the vehicles, and **characterised in that** the accident-prevention triggering device can be actuated with respect to the transverse measurement only, if the wheel speed sensors show that two wheels on the same side of the vehicle are in the air.

2. A device for controlling accident-prevention triggering devices in motor vehicles comprising a control device (5) with a transverse sensor (10) which delivers a transverse measurement characteristic of the transverse acceleration in combination with the lateral tilt of the vehicle to a control device (5) which is connected to the transfer sensor (10) for the purpose of transmitting data and by means of which the transverse measurement can be evaluated and an accident-prevention triggering device (2) can be actuated in accordance with the evaluation, **characterised by** a wheel speed sensor (3') which is connected to the control device (5) for the purpose of transmitting data and which detects the speed of at least one wheel, and by a steering angle sensor (7) connected to the control device (5) for the purpose of data transmission and detecting the steering angle of the vehicle.

3. A device for controlling accident-prevention triggering devices in motor vehicles, comprising a longitudinal sensor (11) which outputs a measurement characteristic of the longitudinal acceleration in combination with the longitudinal tilt of the vehicle, and a control device (5) by means of which the longitudinal measurement can be evaluated and an accident-prevention triggering device (2) can be actuated in accordance with the evaluation, **characterised by** a wheel speed sensor (3') connected to the control device (5) for the purpose of data transmission and detecting the speed of at least one wheel, and **characterised in that** the accident-prevention triggering device can be actuated on the basis of the longitudinal measurement only, if the wheel speed sensors indicate that wheels are locked.

4. A device according to any of claims 1 to 3, **characterised by** a yaw sensor (9) connected to the control device for data transmission and detecting the yaw rate of the vehicle.

5. A process for controlling accident-prevention triggering devices in motor vehicles, the steps of the process being as follows:
a) detection of a transverse measurement characteristic of the transverse acceleration in combination with the lateral tilt of the vehicle;
b) detection of speeds of at least two different wheels on different sides of the vehicle;
c) calculation of a transverse acceleration value from the wheel speeds, the value being characteristic exclusively of the transverse acceleration;
**characterised by**
d) a correction of the transverse measurement, so that a lateral tilt value exclusively characteristic of the lateral tilt is calculated from the transverse measurement, and
e) actuation of the accident-prevention triggering devices in dependence on the transverse tilt value and by
f) actuation of the accident-prevention triggering device on the basis only of the transverse measurement if the wheel speeds show that two wheels on the same side of the vehicle are in the air.

6. A process for controlling accident-prevention triggering devices in motor vehicles, the steps of the process being as follows:
a) detection of a transverse measurement characteristic of the transverse acceleration in combination with the lateral tilt of the vehicle;
b) detection of the steering angle of the vehicle;
**characterised by**
c) detection of the speed of at least one wheel;
d) calculation of a transverse acceleration value from the wheel speed and the steering angle, the value being characteristic exclusively of the transverse acceleration, by
e) a correction of the transverse measurement, so that a lateral tilt value characteristic exclusively of the lateral tilt is calculated from the transverse measurement, and by
f) an actuation of the accident-prevention triggering devices in dependence on the lateral tilt value.

7. A process for controlling accident-prevention triggering devices in motor vehicles, in which the steps of the process are as follows:
a) detection of a longitudinal measurement characteristic of the longitudinal acceleration in combination with the longitudinal tilt of the vehicle;
b) detection of the speed of at least one wheel;
c) calculation of a longitudinal acceleration value from the wheel speed, the value being characteristic exclusively of the longitudinal acceleration,
**characterised by**
d) a correction of the longitudinal measurement, so that a longitudinal tilt value exclusively characteristic of the longitudinal tilt is calculated from the longitudinal measurement, by
e) the actuation of the accident-prevention triggering device in dependence on the longitudinal tilt value, and by
f) the actuation of the accident-prevention triggering device exclusively on the basis of the longitudinal measurement if the wheel speed shows that wheels are locked.

8. A method according to claim 5, in which the yaw rate of the vehicle is measured and influences on the transverse measurement resulting from the yaw rate are compensated.

## Revendications

1. Installation de commande d'installations de déclenchement d'un système de protection dans un véhicule automobile, comportant une installation de commande (5) et un capteur transversal (10) fournissant une valeur de mesure transversale caractéristique de l'accélération transversale combinée à l'inclinaison transversale du véhicule à l'installation de commande (5) reliée par une liaison de transmission de données au capteur transversal (10), dont cette installation de commande (5) exploite la valeur de mesure transversale et actionne une installation de déclenchement (2) du système de protection en fonction de l'exploitation de l'information,
**caractérisée par**
deux capteurs de vitesse de rotation de roue (3', 3") reliés à l'installation de commande (5) par une liaison de transmission de données, ces capteurs saisissant la vitesse de rotation d'au moins deux roues différentes sur des côtés différents du véhicule, et
l'installation de déclenchement du système de protection est actionnée uniquement par la valeur de mesure transversale si les capteurs de vitesse de rotation de roue permettent de constater que deux roues du même côté du véhicule sont soulevées du sol.

2. Installation de commande d'installations de déclenchement d'un système de protection équipant un véhicule comprenant une installation de commande (5), un capteur transversal (10) fournissant une valeur de mesure transversale caractéristique de l'accélération transversale combinée à l'inclinaison transversale du véhicule pour l'installation de commande (5) qui reliée au capteur transversal (10) par une liaison de transmission de données, exploite la valeur de mesure transversale et actionne, en fonction de l'exploitation, une installation de déclenchement (2) du système de protection,
**caractérisée par**
un capteur de vitesse de rotation de roue (3') relié à l'installation de commande (5) par une liaison de transmission de données, ce capteur saisissant la vitesse de rotation d'au moins une roue, et
un capteur d'angle de braquage (7) saisissant l'angle de braquage du véhicule, ce capteur étant relié à l'installation de commande (5) par une liaison de transmission de données.

3. Installation de commande d'installations de déclenchement d'un système de protection équipant un véhicule automobile, comportant un capteur longitudinal (11) fournissant une valeur de mesure caractéristique de l'accélération longitudinale en combinaison avec l'inclinaison longitudinale du véhicule et une installation de commande (5) qui exploite la valeur de mesure longitudinale et actionne, en fonction de cette exploitation, une installation de déclenchement (2) du système de protection,
**caractérisée par**
un capteur de vitesse de rotation de roue (3') relié à l'installation de commande (5) par une liaison de transmission de données, ce capteur saisissant la vitesse de rotation d'au moins une roue, et
l'installation de déclenchement du système de protection est actionnée seulement à l'aide de la valeur de mesure longitudinale si les capteurs de vitesse de rotation de roue détectent le blocage de roues.

4. Installation selon l'une quelconque des revendications 1 à 3,
**caractérisée par**
un capteur de vitesse de lacet (9) relié à l'installation de commande par une liaison de transmission de données et qui saisit la vitesse de lacet du véhicule.

5. Procédé de commande d'installations de déclenchement d'un système de protection équipant un véhicule et comprenant les étapes suivantes :
a) on détermine une valeur de mesure transversale caractéristique de l'accélération transversale combinée à l'inclinaison transversale du véhicule,
b) on détermine la vitesse de rotation d'au moins deux roues différentes de côtés différents du véhicule,
c) on calcule une valeur d'accélération transversale caractéristique exclusivement pour l'accélération transversale à partir de la vitesse de rotation des roues,
**caractérisé par**
d) une correction de la valeur de mesure transversale pour calculer, à partir de la valeur de mesure transversale, une valeur d'inclinaison transversale caractéristique exclusivement pour l'inclinaison transversale,
e) l'actionnement des installations de déclenchement du système de protection en fonction de la valeur d'inclinaison transversale, et par
f) l'actionnement de l'installation de déclenchement du système de protection uniquement à l'aide de la valeur de mesure transversale si les capteurs de vitesse de roue constatent que deux roues du même côté du véhicule sont soulevées de terre.

6. Procédé de commande d'installations de déclenchement d'un système de protection équipant un véhicule automobile comprenant les étapes suivantes :
a) on détermine une valeur de mesure transversale caractéristique pour l'accélération transversale combinée à l'inclinaison transversale du véhicule,
b) on détermine l'angle de braquage du véhicule,
**caractérisé en ce qu'**
c) on détermine la vitesse de rotation d'au moins une roue,
d) on calcule une valeur d'accélération transversale caractéristique exclusivement de l'accélération transversale à partir de la vitesse de rotation de roue et de l'angle de braquage,
e) on corrige la valeur de mesure transversale pour calculer à partir de cette valeur une valeur d'inclinaison transversale caractéristique exclusivement de l'inclinaison transversale et
f) on actionne les installations de déclenchement du système de protection en fonction de la valeur de l'inclinaison transversale.

7. Procédé de commande d'installations de déclenchement d'un système de protection équipant un véhicule automobile comprenant les étapes suivantes :
a) on détermine une valeur de mesure longitudinale caractéristique de l'accélération longitudinale en combinaison avec l'inclinaison longitudinale du véhicule,
b) on détermine la vitesse de rotation d'au moins une roue,
c) on calcule une valeur d'accélération longitudinale caractéristique exclusivement de l'accélération longitudinale à partir de la vitesse de rotation de roue,
**caractérisé en ce qu'**
d) on corrige la valeur de mesure longitudinale pour calculer à partir de cette valeur une valeur d'inclinaison longitudinale caractéristique exclusivement de l'inclinaison longitudinale,
e) on actionne les installations de déclenchement du système de protection en fonction de la valeur de l'inclinaison longitudinale et
f) on actionne l'installation de déclenchement du système de protection uniquement à l'aide de la valeur de mesure longitudinale si les vitesses de rotation de roue permettent de constater que des roues sont bloquées.

8. Procédé selon la revendication 5,
**caractérisé en ce qu'**
on mesure la vitesse de lacet du véhicule et à partir de cette vitesse de lacet on compense son influence sur la valeur de mesure transversale.
